# EUROPEAN PATENT APPLICATION

(11) **EP 4 852 181 A1**
(43) Date of publication of application: **09.12.2026**
(21) Application number: 25748372.7
(22) Date of filing: 17.01.2025
(51) Int. Cl.: H01M 50/284, H01M 50/213, H01M 50/291

(54) **BATTERY PACK**

(30) Priority: 31.01.2024 JP 2024013411
(71) Applicant: Panasonic Intellectual Property Management Co., Ltd., Kadoma-shi, Osaka 571-0057 (JP)
(72) Inventor: NAITO, Atsushi, Kadoma-shi, Osaka 571-0057 (JP); MATSUSHITA, Fumiya, Kadoma-shi, Osaka 571-0057 (JP); SUMI, Tatsuya, Kadoma-shi, Osaka 571-0057 (JP); NORIMINE, Shota, Kadoma-shi, Osaka 571-0057 (JP); HIRANO, Tatsuya, Kadoma-shi, Osaka 571-0057 (JP)
(74) Representative: Eisenführ Speiser
(86) International application number: PCT/JP2025/001406
(87) International publication number: WO 2025/164376

(57) **Abstract**

A battery pack includes a battery block including a plurality of battery cells, a circuit board, a board holder, and a potting resin filled into the board holder and embed the circuit board therein. In the board holder, the circuit board is disposed in an accommodation portion of a bottom plate with a peripheral wall. A filling gap of the potting resin is provided between the circuit board and the bottom plate. The bottom plate includes a pouring groove for the potting resin. The potting resin includes front-side potting resin and back-side potting resin to adhere to the circuit board. The back-side potting resin is integrally coupled to ribbed potting resin poured into the pouring groove and cured.

## Description

### TECHNICAL FIELD

The present invention relates to a battery pack in which a circuit board is embedded in potting resin.

### BACKGROUND ART

A battery pack in which a circuit board held by a board holder is embedded in potting resin has been developed (Patent Literature 1). This battery pack can provide various advantages by embedding the circuit board in the potting resin. For example, the potting resin can enhance the waterproofness of the circuit board and furthermore can improve the heat dissipation of a heat-generating component mounted on the circuit board. This battery pack can be produced by pouring uncured potting resin paste or uncured liquid potting resin into an accommodation portion of the board holder in which the circuit board is disposed and causing the potting resin to adhere closely to both sides of the circuit board to embed the circuit board in the potting resin. The potting resin for embedding a circuit board can embed the circuit board in such a manner that the uncured potting resin is completely poured into both sides of the circuit board, especially a small filling gap on the back side of the circuit board so that the potting resin adheres closely to both sides of the circuit board. The potting resin poured into the filling gap and cured has the advantage of protecting the circuit board by integrally coupling the circuit board to the board holder.

### Citation List

### Patent Literature

Patent Literature 1: Japanese Unexamined Patent Application Publication No. 2005-209995

### SUMMARY OF INVENTION

### Solution to Problem

In the battery pack described above, a filling gap between the circuit board and a bottom plate is provided so that uncured potting resin is poured into the filling gap. When the filling gap is wide, uncured potting resin can be completely poured into the filling gap. However, there is such a problem that the wide filling gap causes an increase in the amount of the potting resin, an increase in material costs, and an increase in the thickness of the board holder on which the circuit board is mounted. This problem can be solved by making the filling gap as narrow as possible, but another problem arises that the narrow filling gap causes a decrease in the fluidity of uncured potting resin and makes it difficult for the uncured potting resin to be poured into the inside, which results in the generation of voids.

The present invention has been developed to solve the above-mentioned problems and an object of the present disclosure is to provide a battery pack that allows uncured potting resin to be smoothly poured into a filling gap between a circuit board and a board holder and thereby allows the circuit board to be embedded in potting resin.

A battery pack according to one aspect of the present disclosure includes all of the following configurations (a) to (e).
(a) A battery pack includes:
   a battery block including a plurality of battery cells;
   a circuit board connected to the battery block;
   a board holder configured to hold the circuit board; and
   a filler including potting resin filled into the board holder to embed the circuit board.
(b) The board holder
   including a bottom plate having a peripheral wall to define an accommodation portion, and
   accommodates the circuit board in the accommodation portion, and
   a filling gap of the filler is provided between the circuit board and the bottom plate.
(c) The board holder includes
   a pouring groove for the potting resin in the bottom plate.
(d) The filler in which the circuit board is embedded includes:
   a front-side filler that closely adheres to the front side of the circuit board; and
   a back-side filler that closely adheres to the back side of the circuit board.
(e) The back-side filler
   is integrally coupled to a ribbed filler having been poured into the pouring groove and cured.

The battery pack described above has an advantage that, by smoothly pouring uncured potting resin into the filling gap between the circuit board and the board holder, the circuit board can be embedded in a preferred condition in the filler made of potting resin.

### BRIEF DESCRIPTION OF THE DRAWINGS

Fig. 1 is a schematic perspective view of a battery pack according to an embodiment of the present invention.
Fig. 2 is a schematic perspective view of a battery block, a board holder, and a circuit board.
Fig. 3 is a schematic exploded perspective view of the board holder and the circuit board.
Fig. 4 is a schematic plan view illustrating a state in which the circuit board is disposed inside the board holder and an enlarged view of a principal part.
Fig. 5 is a schematic cross-sectional view of the battery pack, taken along line V-V in Fig. 1.
Fig. 6 is an enlarged view of principal part VI in Fig. 5.
Fig. 7 is a schematic cross-sectional perspective view illustrating a state in which the circuit board is embedded in potting resin inside the board holder.
Fig. 8 is a schematic cross-sectional view, taken along line VIII-VIII in the enlarged view of the principal part in Fig. 4, the enlarged view illustrating a state in which the circuit board is embedded in potting resin.
Fig. 9 is a schematic cross-sectional view, taken along line IX-IX in the enlarged view of the principal part in Fig. 4, the enlarged view illustrating a state in which the circuit board is embedded in potting resin.

### DETAILED DESCRIPTIONS

Hereinafter, the present invention will be described in detail with reference to the drawings. In the following description, terms indicating specific directions and positions (for example, "upper", "lower", and other terms including these terms) are used as necessary. These terms, however, are used to facilitate understanding of the invention with reference to the drawings, and the technical scope of the present invention is not limited by the meanings of these terms. Parts denoted by the same reference marks in a plurality of the drawings represent the same or equal parts or members.

It should be further noted that embodiments described below merely illustrate specific examples of the technical concept of the present invention, and therefore the present invention is not limited to the embodiments. Further, unless otherwise specified, dimensions, materials, shapes, relative arrangements, and the like of constituents described below are not intended to limit the scope of the present invention but are intended to be illustrative. The descriptive contents of one embodiment or example are applicable to other embodiments or examples. In addition, sizes, positional relationships, and the likes of members illustrated in the drawings may be exaggerated to give a clear description.

Embodiments of the present disclosure may be specified with the following configuration and characteristics.

A battery pack according to an embodiment of the present disclosure includes all of the following configurations (a) to (e).
(a) A battery pack includes:
   a battery block including a plurality of battery cells;
   a circuit board connected to the battery block;
   a board holder configured to hold the circuit board; and
   a filler including potting resin filled into the board holder to embed the circuit board.
(b) The board holder
   includes a bottom plate having a peripheral wall to defines an accommodation portion, and
   accommodates the circuit board in the accommodation portion, and
   a filling gap of the filler is provided between the circuit board and the bottom plate.
(c) The boar holder includes
   a pouring groove for the potting resin in the bottom plate.
(d) The filler in which the circuit board is embedded includes:
   a front-side filler that closely adheres to the front side of the circuit board; and
   a back-side filler that closely adheres to the back side of the circuit board.
(e) The back-side filler
   is integrally coupled to a ribbed filler poured into the pouring groove and cured.

The above-described battery pack has an advantage that, since potting resin is smoothly poured into the filling gap provided between the circuit board and the board holder, a portion not filled with potting resin is unlikely to generate in the filling gap. The potting resin poured between the circuit board and the bottom plate closely adheres to the whole back side of the circuit board and ideally insulates the circuit board. In addition, the battery pack has another advantage that the filler made of the potting resin on the back side integrally couples the circuit board to the bottom plate of the board holder to securely fix the circuit board to the board holder. The reason why the above-described battery pack allows the filling gap to be smoothly filled with uncured potting resin is that the pouring groove is provided in the bottom plate to enhance the fluidity of the uncured potting resin. The uncured potting resin with increased fluidity flows smoothly into the inside of the filling gap and furthermore diffuses on both sides to fill the entirety of the filling gap.

Furthermore, in the above-described battery pack, potting resin on the back side integrally couples the circuit board to the bottom plate of the board holder, and uncured potting resin poured into the pouring groove is cured to form a ribbed filler, and the ribbed filler is integrally coupled to a back-side filler to form a reinforcing rib, whereby the back-side filler can be reinforced. In addition, ribs of the bottom plate of the board holder can enhance the strength of the board holder itself, and the back-side filler reinforced by the ribbed filler is integrally coupled to the circuit board and thus can contribute to relaxation of external stress on the circuit board.

A battery pack according to another embodiment of the present disclosure includes an inlet opening for uncured potting resin between the side edge of the circuit board and the inner surface of the peripheral wall, and potting resin poured into the inlet opening is cured so that a coupling filler that couples a front-side filler to a back-side filler can be formed. The coupling filler integrally couples the front-side filler to the back-side filler. In the above-described battery pack, uncured potting resin can be smoothly poured through the inlet opening into the filling gap of the bottom plate, so that the circuit board can be embedded in the filler. In addition, the pouring groove is filled with uncured potting resin through the inlet opening and the uncured potting resin diffuses throughout the filling gap via the pouring groove, so that the entirety of the filling gap can be filled. In addition, the filler made of the potting resin filled into the inlet opening is such that the front-side filler is integrally coupled to the back-side filler by the coupling filler, so that the circuit board can be embedded in the filler.

In a battery pack according to another embodiment of the present disclosure, an inlet opening communicating with an end of the pouring groove can be opened. The above-described battery pack has an advantage that, since the inlet opening communicating with the end of the pouring groove is provided, uncured potting resin can be smoothly poured into the pouring groove from the inlet opening. The pouring groove into which the uncured potting resin has been poured causes the potting resin to be smoothly poured into the inside of the filling gap. In addition, this structure has an advantage that the back-side filler poured into the inlet opening and cured and the ribbed filler poured into the pouring groove and cured are more firmly integrally coupled to more firmly reinforce the circuit board embedded therein.

In a battery pack according to another embodiment of the present disclosure, the peripheral wall of the board holder includes a protruding peripheral wall protruding in the width direction, and an inlet opening can be provided between the protruding peripheral wall and the outer peripheral edge of the circuit board. The above-described battery pack has an advantage that, since the inlet opening is provided between the protruding peripheral wall provided in the peripheral wall of the board holder and the outer peripheral edge of the circuit board, the inlet opening has a larger opening area and uncured potting resin can be smoothly poured into the filling gap and the pouring groove. In addition, the above-described structure has an advantage that the cross section of the coupling filler cured in the inlet opening having a large opening area is enlarged, and the front-side filler and the back-side filler can be integrally coupled by the coupling filler of high strength and the circuit board can be embedded in a more preferred condition in the filler.

In a battery pack according to another embodiment of the present disclosure, the inlet opening can be in the form of a slit extending along the longitudinal direction of the side edge of the circuit board. The above-described battery pack has an advantage that the inlet opening can be in the form of a long, narrow slit, and the inlet opening having a large opening area is provided at the side edge of the circuit board to allow uncured potting resin to be smoothly poured into the filling gap and the pouring groove.

In a battery pack according to another embodiment of the present disclosure, the board holder includes a pair of opposite peripheral walls extending longitudinally along both sides of the circuit board, and each of the opposite peripheral walls can include a plurality of protruding peripheral walls each being the protruding peripheral wall. In the above-described battery pack, each of the opposite peripheral walls includes the protruding peripheral walls and inlet openings are provided between both side edges of the circuit board and the protruding peripheral walls, whereby uncured potting resin can be poured more smoothly into the filling gap and the pouring groove through each of the inlet openings. Thus, the above-described battery pack has an advantage that, even when the circuit board is long and narrow, potting resin can be surely poured into the entirety of the filling gap.

In a battery pack according to another embodiment of the present disclosure, a notch can be provided in the outer peripheral edge of the circuit board. In the above-mentioned battery pack, the notch provided in the outer peripheral edge of the circuit board can function as the inlet opening through which uncured potting resin is poured into the back side of the circuit board, whereby the inlet opening with a large opening area can be provided without providing a protruding peripheral wall in the peripheral wall of the board holder or with providing a protruding peripheral wall in a small amount of protrusion. Thus, the above-described battery pack has an advantage that, without increasing the width of the board holder, the opening area of the inlet opening can be increased and uncured potting resin can be poured into the filling gap and the pouring groove. In addition, in the above-described structure, the notch is disposed opposite the protruding peripheral wall, so that the inlet opening can be made larger.

In a battery pack according to another embodiment of the present disclosure, a plurality of columns of pouring grooves each being the pouring groove can be provided in the bottom plate. The above-mentioned battery pack has an advantage that, even when the circuit board is long and narrow, the columns of the pouring grooves are spaced in the longitudinal direction of the circuit board, so that uncured potting resin can be smoothly poured into the entirety of the filling gap.

In a battery pack according to another embodiment of the present disclosure, the circuit board can be a double-sided board including components mounted on both sides thereof, and a back-side component mounted on the back side of the circuit board can be embedded in the ribbed filler obtained by curing potting resin in the pouring groove. The above-described battery pack has an advantage that, since the back-side component mounted on the back side of the circuit board can be disposed inside the pouring groove, whereby space efficiency can be increased and the double-sided board can be disposed closer to the bottom plate. In addition, the above-described battery pack has another advantage that, by embedding a part of the back-side component in the filler poured into the pouring groove, the filler and the circuit board can be coupled more securely, especially with increased peeling strength.

In a battery pack according to another embodiment of the present disclosure, the battery block includes a plurality of battery cells and a battery holder configured to hold the battery cells in a fixed position, the battery cells are cylindrical batteries, the battery holder includes a valley groove between the cylindrical batteries disposed adjacent to each other, and the pouring groove of the bottom plate can be disposed in the valley groove of the battery holder. In the above-described battery pack, the pouring groove of the bottom plate is disposed in the valley groove of the battery holder to increase space efficiency, whereby the board holder can be disposed close to the battery holder. Thus, the battery pack has an advantage that, while the pouring groove is provided in the bottom plate of the board holder to allow uncured potting resin to be poured smoothly into the inside of the filling gap, the entirety of the battery pack can be made compact.

### (First embodiment)

Battery pack 1 includes: battery block 3 including a plurality of battery cells 2; circuit board 4 connected to battery block 3; board holder 5 configured to hold circuit board 4; and filler 6 configured to fix circuit board 4 to board holder 5. Filler 6 is made of potting resin.

### (Battery block 3)

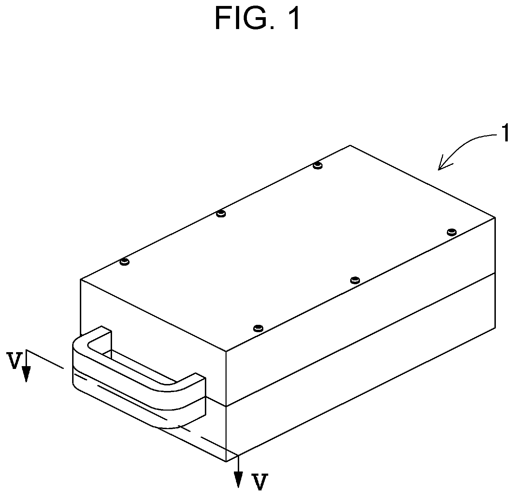

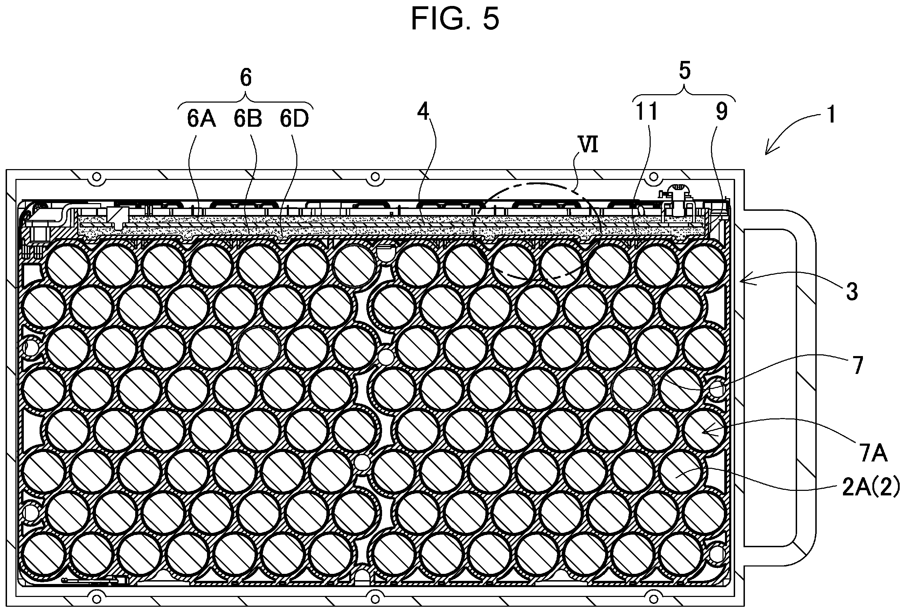

Battery pack 1 in Fig. 1 to Fig. 9 includes: battery block 3 including a plurality of battery cells 2; circuit board 4 connected to battery block 3; and board holder 5 configured to hold circuit board 4. Circuit board 4 is embedded in filler 6 and disposed in a fixed position in board holder 5. The present disclosure does not limit the type, shape, position, arrangement, and connection of battery cells 2, but, for example, in battery block 3 illustrated in the cross-sectional view of Fig. 5, rechargeable battery cells 2 are arranged parallel to each other in battery holder 7. Battery cells 2 in Fig. 5 are cylindrical batteries 2A, and cylindrical batteries 2A serving as battery cells 2 are in a vertical position in a multi-row, multi-column, staggered configuration. Battery cells 2 are rechargeable secondary batteries, and lithium-ion secondary batteries can be used as battery cells 2. However, the present disclosure does not limit battery cells 2 to lithium-ion batteries, and all other types of rechargeable batteries, for example, currently available batteries, such as lithium polymer secondary batteries, and all-solid-state batteries under development can be used as battery cell 2. In addition, in battery pack 1 in Fig. 5, battery cells 2 are cylindrical batteries 2A, but battery cells 2 can be batteries other than cylindrical batteries, such rectangular batteries.

In battery block 3, battery cells 2 are arranged parallel to each other in battery holder 7 and connected in parallel or series with each other by a lead plate (not illustrated). Battery block 3 allows battery cells 2 to be connected in parallel with each other and divided into parallel units. Battery block 3 can increase the output voltage by connecting the parallel units in series with each other.

Battery holder 7 causes battery cells 2 to be disposed in a fixed position. Battery holder 7 is produced by molding a highly insulative material, preferably thermoplastic. Battery holder 7 holds battery cells 2 in a fixed position so that battery cells 2 are arranged parallel to each other and end surfaces of battery cells 2 are positioned on the same plane.

Battery holder 7 includes a plurality of cell holder openings 7A configured to allow battery cells 2 to be inserted thereinto and hold battery cells 2 in the fixed position. Each cell holder opening 7A has an internal shape along almost the whole circumference of the surface of battery cell 2. In battery holder 7, each battery cell 2 is inserted into a corresponding one of cell holder openings 7A and disposed in a predetermined position.

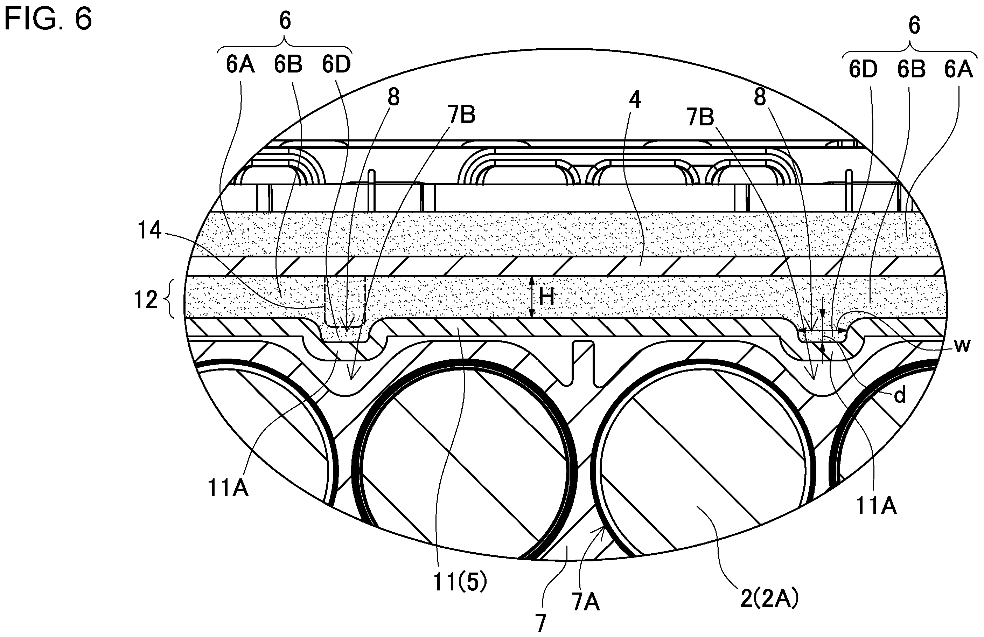

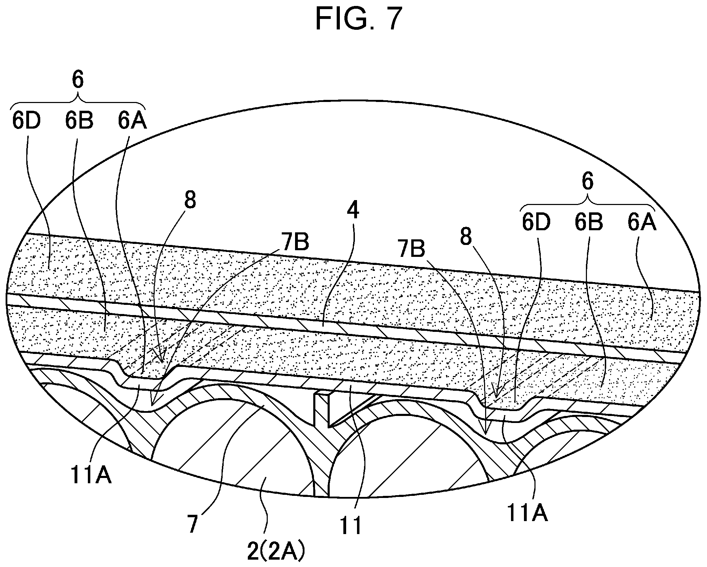

In battery block 3 illustrated in the cross-sectional view of Fig. 5, cylindrical batteries 2A serving as battery cells 2 are disposed in a staggered configuration. As illustrated in Fig. 5, in battery block 3 in which cylindrical batteries 2A are disposed in the staggered configuration, valley groove 7B can be provided in the upper surface of battery holder 7. Battery holder 7 can include a plurality of valley grooves 7B, so that the upper surface of battery holder 7 is in a wave form along the upper surfaces of cylindrical batteries 2A. As illustrated in the enlarged cross-sectional view of Fig. 6 and the enlarged cross-sectional perspective view of Fig. 7, pouring groove 8 is provided in bottom plate 11 of board holder 5 described later, so that pouring groove 8 can be effectively utilized as a space to guide protrusion line 11A protruding downward.

### (Circuit board 4)

Circuit board 4 is connected to battery block 3 via a lead (not illustrated), and an electronic component that realizes a protection circuit (not illustrated) configured to control the charge and discharge of battery cells 2 is mounted on circuit board 4. Circuit board 4 is a double-sided board in which components such as a semiconductor element configured to control charging and discharging are mounted on both the front side and the back side and circuit board 4 allows the components to be disposed in an optimum position. The semiconductor element is an element configured to control the charge and discharge of battery block 3. The protection circuit can prevent overcharge and overdischarge of battery cells 2 constituting battery block 3 by detecting the voltage, remaining capacity, temperature, current, and the like of battery cells 2 and controlling charge and discharge current. In addition, the protection circuit can prevent deterioration of battery cells 2 and degradation of electrical characteristics by detecting an abnormal condition of battery cells 2 and controlling charge and discharge current. The semiconductor element of the protection circuit is, for example, FET or a transistor.

The semiconductor element configured to control the charge and discharge current of battery block 3 generates Joule heat. Joule heat increases in proportion to the product of the square of a flowing current by an equivalent resistance. Since the semiconductor element controls the charge and discharge current of battery block 3, the amount of heat generated increases as a load current or a charge current of battery pack 1 increases. For example, when the load current or the charge current doubles, the heat generation energy of the semiconductor element quadruples and the temperature rises. The semiconductor element needs heat dissipation to maintain a temperature equal to or lower than a preset temperature.

Circuit board 4 embedded in filler 6 can dissipate heat energy of a heat-generating component such as a semiconductor element via filler 6. Filler 6 adheres closely to the surface of a heat-generating component such as a semiconductor element in a preferable thermal bonding state and efficiently dissipates heat energy. Filler 6 embedding the double-sided board adheres to heat-generating components such as a semiconductor element mounted on both sides of circuit board 4 and thereby can dissipate heat efficiently.

### (Board holder 5)

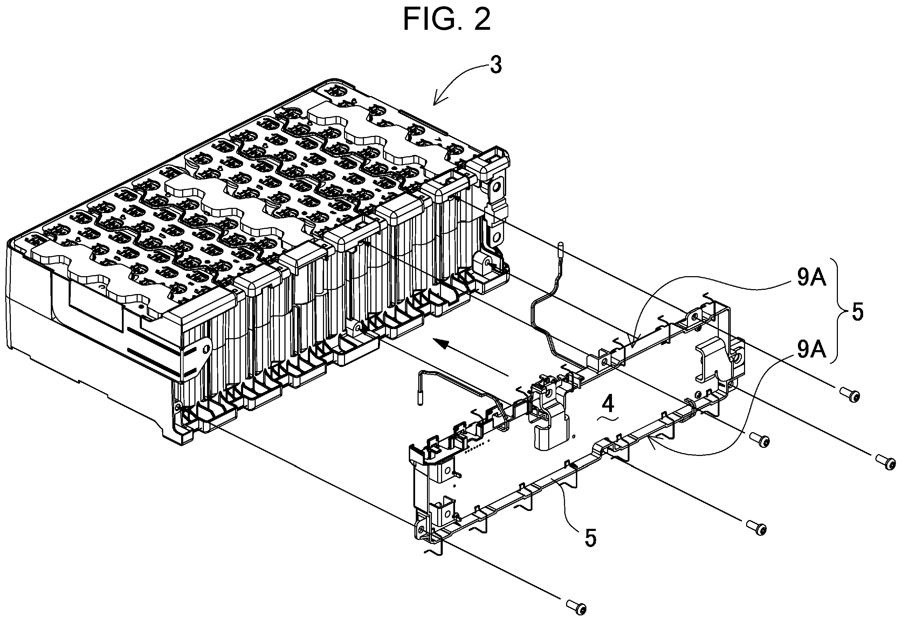

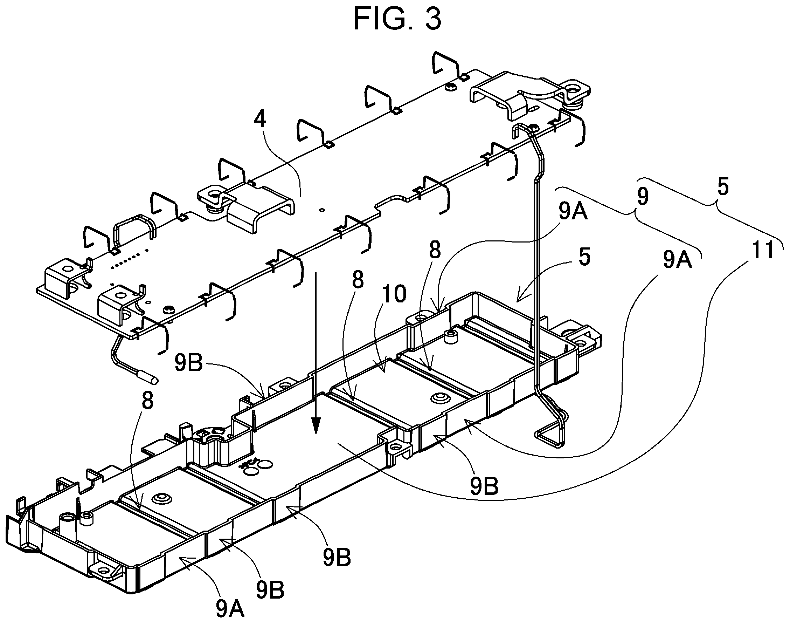

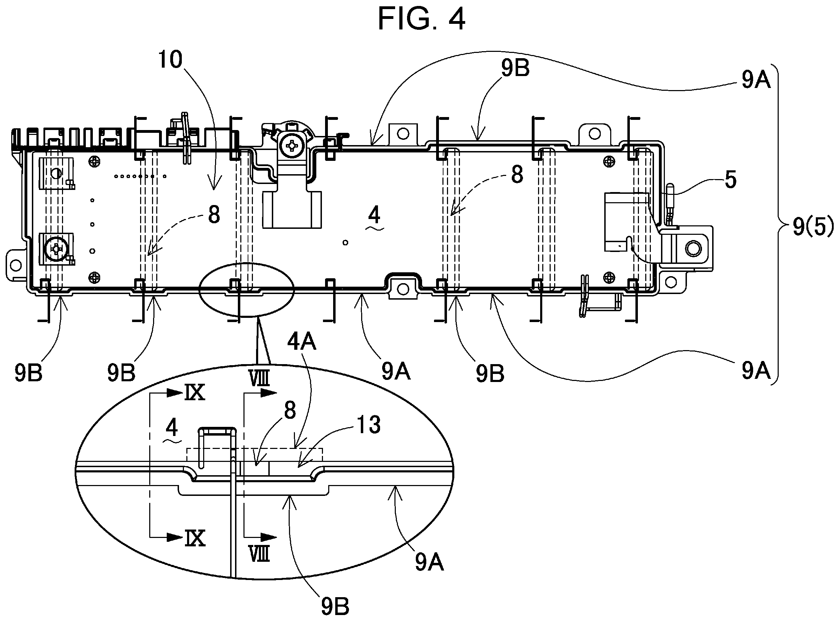

Board holder 5 illustrated in the exploded perspective view of Fig. 3 and the plan view of Fig. 4 disposes and holds circuit board 4 in a fixed position. In these drawings, filler 6 is not illustrated, but circuit board 4 is embedded in filler 6 and disposed in the fixed position, as described later. Filler 6 is made of potting resin that has fluidity in an uncured state and that is cured after poured and filled into board holder 5 to embed circuit board 4. For example, transparent urethane resin is suitable for filler 6. Urethane resin is resin that is cured by a chemical reaction between polyol and isocyanate as a curing agent. However, the present disclosure does not limit filler 6 to urethane resin, but any resin having fluidity in an uncured state and capable of being cured to embed circuit board 4 in board holder 5, such as epoxy resin or silicon resin, can be used. In battery pack 1, board holder 5 is disposed and fixed by making board holder 5 close to battery block 3 and coupling board holder 5 to battery block 3. The present disclosure does not limit the arrangement and position of board holder 5, but, for example, as illustrated in Fig. 2, board holder 5 can be disposed on and fixed to a side surface of battery block 3.

Board holder 5 illustrated in the exploded perspective view of Fig.3 includes bottom plate 11 and peripheral wall 9 connected to the outer edge of bottom plate 11. In board holder 5 in Fig. 3, peripheral wall 9 is disposed to surround bottom plate 11, so that the inside of peripheral wall 9 serves as accommodation portion 10 configured to accommodate circuit board 4. In board holder 5, a gap is provided above bottom plate 11 and circuit board 4 is disposed on the gap. In board holder 5 in Fig. 6 (Fig. 5), circuit board 4 is arranged parallel to bottom plate 11, and filling gap 12 to be filled with filler 6 is provided between circuit board 4 and bottom plate 11. Accommodation portion 10 is a region surrounded by bottom plate 11 provided on the bottom side and peripheral wall 9 surrounding bottom plate 11, in which circuit board 4 is disposed inside and embedded in filler 6. In board holder 5, accommodation portion 10 holding circuit board 4 is filled with uncured potting resin that is to form filler 6, and circuit board 4 is embedded in cured filler 6. In board holder 5, uncured potting resin is poured into accommodation portion 10 in a state in which circuit board 4 is fixed to accommodation portion 10, so that circuit board 4 is embedded in filler 6. Filler 6 is cured to fix circuit board 4 to board holder 5. Furthermore, filler 6 adheres closely to both sides of circuit board 4 and mounting components such as a semiconductor element mounted on circuit board 4, and thereby embeds circuit board 4. In addition to fixing circuit board 4 to board holder 5 without misalignment, filler 6 adhering closely to circuit board 4 and the mounting components is heat-bonded to the heat generating mounting component in a preferable condition to absorb the heat energy of the mounting component and dissipate heat. In the cross-sectional perspective view of Fig. 7, there is illustrated a state in which circuit board 4 disposed in accommodation portion 10 of board holder 5 is embedded in filler 6.

### (Bottom plate 11)

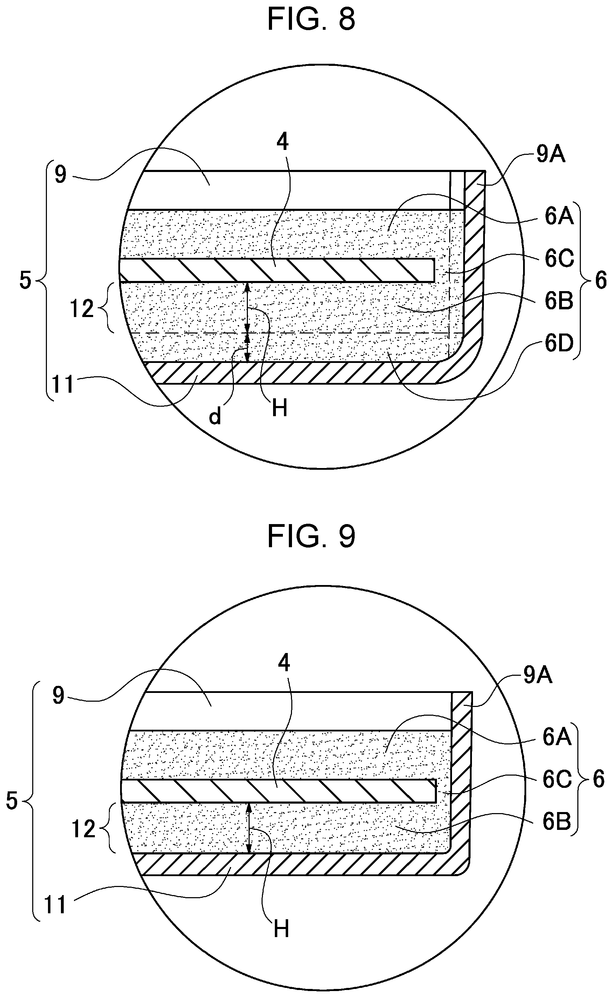

In board holder 5 illustrated in the exploded perspective view of Fig. 3 and the plan view of Fig. 4, bottom plate 11 includes pouring groove 8 configured to enhance the fluidity of uncured potting resin and smoothly pour the uncured potting resin into filling gap 12. Pouring groove 8 increases the cross section of a flow path on the back side of circuit board 4, enhances the fluidity of uncured potting resin supplied, and forms the flow path to rapidly pour the uncured potting resin into the entirety of filling gap 12. By increasing the height of filling gap 12, filling gap 12 can be smoothly filled with uncured potting resin to the inside, but, the increase of the height (H) of filling gap 12 causes such problems that circuit board 4 becomes distant from bottom plate 11, board holder 5 becomes substantially thick and bulky, and the external form of battery pack 1 is enlarged. Furthermore, there is such a problem that the amount of potting resin filled increases to cause an increase in material costs. By narrowing filling gap 12, board holder 5 on which circuit board 4 is mounted can be substantially thinner, and the amount of potting resin used can be reduced to reduce material costs. However, narrow filling gap 12 causes such a problem that uncured potting resin cannot be smoothly poured into the inside and a void not filled with the potting resin is formed in filler 6 on the back side of the circuit board 4. Pouring groove 8 has a groove form that is partially recessed below the bottom surface of bottom plate 11, whereby the height (H) of filling gap 12 can be within a proper range, filling gap 12 can be narrow, board holder 5 on which circuit board 4 is mounted can be substantially thin, and the amount of potting resin can be reduced, while the cross section of the flow path on the back side of circuit board 4 can be partially enlarged, the fluidity of uncured potting resin can be enhanced, and uncured potting resin can be smoothly poured into filling gap 12. As illustrated in the cross-sectional view of Fig. 7, the height (H) of filling gap 12 is narrow in a portion not provided with pouring groove 8. In contrast, as illustrated in the cross-sectional view of Fig. 8, in a portion provided with pouring groove 8, the cross section of the flow path on the back side of circuit board 4 is partially enlarged by the depth (d) of pouring groove 8 in addition to the height (H) of filling gap 12. Furthermore, pouring groove 8 can be reinforced in bead form to enhance the strength of board holder 5.

In board holder 5 in which pouring groove 8 is provided in bottom plate 11, the height (H) of filling gap 12 can be set to an optimum value in consideration of the fluidity of uncured potting resin and the width of circuit board 4. For example, in battery pack 1 in which urethane resin is used as potting resin, filler 6 can be formed by filling the entirety of filling gap 12, for example, of 2 mm or more with uncured potting resin via pouring groove 8 provided in bottom plate 11.

Pouring groove 8 is a groove to enhance the fluidity of uncured potting resin flowing into filling gap 12 and thereby smoothly pour the uncured potting resin into filling gap 12 between circuit board 4 and bottom plate 11. Pouring grooves 8 can increase the cross section of a flow path to enhance the fluidity of uncured potting resin. As illustrated in the exploded perspective view of Fig. 3, in long, narrow circuit board 4, a plurality of columns of pouring grooves 8 extending in the width direction, that is, the lateral direction of circuit board 4 is provided parallel to each other in bottom plate 11 and the entirety of filling gap 12 is filled with uncured potting resin, so that filler 6 can be formed. Board holder 5 in which the columns of pouring grooves 8 are provided in bottom plate 11 has an advantage that, with pouring grooves 8, the cross sections of flow paths in a plurality of regions of filling gap 12 are enlarged to enhance the fluidity and the whole surface of long, narrow circuit board 4 is uniformly filled with uncured potting resin without generating any void not filled with potting resin, and thus filler 6 can be formed.

The cross-sectional shape and position of the columns of pouring grooves 8 are set to the optimum shape and position in consideration of the fluidity of uncured potting resin constituting filler 6. As illustrated in the enlarged cross-sectional view of Fig. 6, the depth (d) and the inner width (w), which constitute the cross section, of pouring groove 8 for transparent urethane resin, for example, can be set such that the depth (d) of pouring groove 8 is 10% or higher, preferably 20% or higher of the height (H) of filling gap 12 and the inner width (w) of pouring groove 8 is one to ten times, preferably one to five times the depth (d) of pouring groove 8, whereby the fluidity of uncured potting resin to be poured into filling gap 12 can be enhanced and improved.

In board holder 5 illustrated in Fig. 4, inlet opening 13 through which uncured potting resin is poured into the back side of circuit board 4 is provided between peripheral wall 9 and the outer peripheral edge of circuit board 4. Inlet opening 13 is an opening through which uncured potting resin supplied over circuit board 4 is poured into the back side of circuit board 4. In board holder 5, inlet opening 13 is provided to communicate with the end of pouring groove 8. The pouring grooves in Fig. 4 include pouring groove 8 provided with inlet opening 13 at one end thereof and a pouring groove with inlet openings 13 at both ends thereof. This structure has an advantage that uncured potting resin flowing from inlet opening 13 can be smoothly poured into the pouring groove and thereby can be smoothly poured into the entirety of the filling gap.

In board holder 5 illustrated in Fig. 3 and Fig. 4, protruding peripheral wall 9B protruding outward is provided in a part of peripheral wall 9, and inlet opening 13 for uncured potting resin constituting filler 6 is provided inside protruding peripheral wall 9B. Inlet opening 13 illustrated in the enlarged view of Fig. 4 is in the form of a slit extending in the width direction of pouring groove 8. In board holder 5, the width of protruding peripheral wall 9B can be increased, in other words, the slit can be made longer to increase the opening area of inlet opening 13. In addition, in inlet opening 13, the width of the slit can be increased to increase the opening area. Inlet opening 13 having a large opening area has an advantage that uncured potting resin can be more smoothly poured into the back side of circuit board 4 and poured into pouring groove 8. Inlet opening 13 is an opening through which uncured potting resin is poured into circuit board 4 from the upper side to the lower side, and filler 6 made of potting resin poured through inlet opening 13 is coupling filler 6C cured to couple front-side filler 6A to back-side filler 6B. Coupling filler 6C functions as a protective cover for the outer peripheral edge of circuit board 4 and integrally couples front-side filler 6A to back-side filler 6B to protect embedded circuit board 4. Protruding peripheral wall 9B (Fig. 8) formed by protrusion of peripheral wall (Fig. 7) of board holder 5 in the width direction makes the opening area of inlet opening 13 larger, and makes it easier to more smoothly pour uncured potting resin into the back side of circuit board 4 and furthermore pour the uncured potting resin into pouring groove 8, and cured coupling filler 6C integrally couples front-side filler 6A to back-side filler 6B, whereby circuit board 4 can be embedded in filler 6 in a preferable condition and protected, and back-side filler 6B is integrally coupled to ribbed filler 6D to be further reinforced, whereby circuit board 4 can be protected.

Board holder 5 is molded from insulating plastic so that bottom plate 11 and peripheral wall 9 are integrated into one. Board holder 5 illustrated in the plan view of Fig. 4 includes a pair of opposite peripheral walls 9A extending longitudinally on both sides of circuit board 4. A plurality of protruding peripheral walls 9B is provided in each of opposite peripheral walls 9A and inlet openings 13 are provided opposite both side edges of circuit board 4. Inlet opening 13 between protruding peripheral wall 9B and the side edge of circuit board 4 communicate with an end of pouring groove 8 on both sides. In board holder 5 in which a plurality of inlet openings 13 is provided at opposite positions on both sides of circuit board 4, uncured potting resin is poured into pouring groove 8 from each of inlet openings 13, so that, even when circuit board 4 is long and narrow, potting resin can be surely and stably poured into the entirety of filling gap 12 between bottom plate 11 and circuit board 4.

As illustrated with a chain line in the enlarged cross-sectional view of Fig. 4, circuit board 4 includes notch 4A at the outer peripheral edge thereof. Notch 4A is preferably placed opposite protruding peripheral wall 9B. Notch 4A makes larger the gap between the inner surface of protruding peripheral wall 9B provided in peripheral wall 9 and notch A and thereby can increase the opening area of inlet opening 13. Alternatively, notch 4A can be placed in inlet opening 13 of board holder 5, so that inlet opening 13 with a large opening area can be provided without providing protruding peripheral wall 9B in peripheral wall 9 or with a small amount of protrusion of protruding peripheral wall 9B. Circuit board 4 provided with notch 4A has an advantage that uncured potting resin can be more smoothly poured into filling gap 12 through inlet opening 13.

Furthermore, in board holder 5 in Fig. 3 and Fig. 4, a plurality of pouring grooves 8 is provided in bottom plate 11 in the middle of circuit board 4 so as to extend in the width direction, whereby the fluidity of uncured potting resin can be enhanced and the uncured potting resin can be completely poured into filling gap 12. Filling gap 12 is entirely filled with uncured potting resin whose fluidity has been increased owing to pouring grooves 8. Bottom plate 11 in Fig. 3 includes six columns of pouring grooves 8 extending in the width direction. In board holder 5, pouring grooves 8 are filled with uncured potting resin to increase the filling amount and volume of filler 6, whereby heat energy absorbed from circuit board 4 and a heat generating component can be increased.

For example, six columns of pouring grooves 8 each having a depth of 2 mm, an inner width of approximately 4 mm, and a length (L) of 60 mm are provided in board holder 5 in which the filling volume of filler 6 to embed circuit board 4 is 44,500 mm2, hence the filling volume in board holder 5 can be increased to 47,380 mm2. Board holder 5 with the increased filling volume of filler 6 allows the heat capacity absorbed from embedded circuit board 4 to increase and allows heat energy from the heat generating component mounted on circuit board 4 to be efficiently dissipated.

Board holder 5 in Fig. 4 includes inlet openings 13 also in the corners of the outer peripheral edge of circuit board 4. In addition to the effect of rapidly pouring uncured potting resin into pouring grooves 8, inlet openings 13 have an advantage that coupling filler 6C cured inside inlet openings 13 protects the corners of circuit board 4, reinforces the corners of peripheral wall 9 of board holder 5 from the inside, and relaxes external stress, and thereby can prevent damage due to impacts such as drop impacts. In addition, coupling filler 6C poured through inlet openings 13 provided on both sides of circuit board 4 and cured protects circuit board 4 and board holder 5 and relaxes the external stress of circuit board 4 and board holder 5, and thereby can prevent damage due to impacts such as drop impacts.

Filler 6 embedding circuit board 4 reinforces circuit board 4 by sandwiching circuit board 4 between front-side filler 6A and back-side filler 6B. Furthermore, back-side filler 6B is reinforced by ribbed filler 6D poured into pouring grooves 8 and cured and thereby has the effect of reinforcing board holder 5 and circuit board 4, and, in addition, has the effect of protecting circuit board 4 by relaxing external stress applied to circuit board 4. In addition, filler 6 embedding circuit board 4 has the advantage of increasing heat energy absorbed from heat energy of circuit board 4 and a mounting component when pouring grooves 8 are provided in bottom plate 11 and ribbed filler 6D in an integrated structure is provided to increase the filling amount and volume of filler 6.

As illustrated in the enlarged cross-sectional view of Fig. 6, a part of back-side component 14 mounted on the back side of circuit board 4 can be disposed inside pouring groove 8 of board holder 5 and embedded in cured ribbed filler 6D. This structure has an advantage that, since back-side component 14 protruding on the back side of the double-sided board configured to fix a mounting component on the back side thereof is disposed inside pouring groove 8, the double-sided board can be disposed close to bottom plate 11 while the partial height of the mounting component is secured by filling gap 12 and pouring groove 8. In addition, the structure has another advantage that, since back-side component 14 is embedded in filler 6 of pouring groove 8, filler 6 and circuit board 4 can be more surely coupled, especially with increased peeling strength.

Furthermore, in battery pack 1 illustrated in the cross-sectional view of Fig. 6, pouring groove 8 provided in bottom plate 11 of board holder 5 is disposed in valley groove 7B provided in the surface of battery block 3, whereby board holder 5 is disposed closer to battery block 3. In battery block 3 in Fig. 6, battery cells 2 are cylindrical batteries 2A, and these cylindrical batteries 2A are disposed in the staggered configuration by battery holder 7, and valley groove 7B is provided between adjacent cylindrical batteries 2A. Battery holder 7 can be formed along the surface of cylindrical battery 2A and provided with valley groove 7B on the surface of battery holder 7. Bottom plate 11 of board holder 5 can be provided with pouring groove 8 and thereby provided with protrusion line 11A protruding downward. Protrusion line 11A is disposed in valley groove 7B of battery holder 7. Battery pack 1 with this structure has an advantage that, while board holder 5 is disposed closer to battery block 3, potting resin is poured into pouring groove 8 to surely couple circuit board 4 to board holder 5 by filler 6, whereby the entirety of battery pack 1 can be made compact.

### Industrial Availability

The battery pack according to the present disclosure can be effectively used as a battery pack that allows uncured potting resin to be smoothly poured into the filling gap between the circuit board and the board holder to embed the circuit board in the uncured potting resin.

### REFERENCE MARKS IN THE DRAWINGS

1...battery pack
2...battery cell
2A...cylindrical battery
3...battery block
4...circuit board
4A...notch
5...board holder
6...filler
6A...front-side filler
6B...back-side filler
6C...coupling filler
6D...ribbed filler
7...battery holder
7A...cell holder opening
7B...valley groove
8...pouring groove
9...peripheral wall
9A...opposite peripheral wall
9B...protruding peripheral wall
10...accommodation portion
11...bottom plate
11A...protrusion line
12...filling gap
13...inlet opening
14...back-side component

## Claims

1. A battery pack, comprising:
a battery block including a plurality of battery cells;
a circuit board connected to the battery block;
a board holder configured to hold the circuit board; and
a filler with which the circuit board is filled and in which the circuit board is embedded,
wherein the filler includes potting resin,
the board holder
including a bottom plate including a peripheral wall to define an accommodation portion, and
accommodates the circuit board in the accommodation portion,
a filling gap of the filler is provided between the circuit board and the bottom plate,
the board holder includes
a pouring groove for the filler in the bottom plate,
the filler embedding the circuit board includes
a front-side filler closely adhering to a front side of the circuit board, and
a back-side filler closely adhering to a back side of the circuit board, and the back-side filler is
integrally coupled to a ribbed filler poured into the pouring groove and cured.

2. The battery pack according to Claim 1, further comprising
an inlet opening for the potting resin uncured
the inlet opening being located between a side edge of the circuit board and an inner surface of the peripheral wall,
wherein the filler is formed by curing the potting resin poured into the inlet opening, and
further includes a coupling filler coupling the front-side filler to the back-side filler.

3. The battery pack according to Claim 2, wherein
the inlet opening is opened to communicate with an end of the pouring groove.

4. The battery pack according to Claim 2, wherein
the peripheral wall of the board holder includes a protruding peripheral wall protruding in a width direction, and
the inlet opening is provided between the protruding peripheral wall and an outer peripheral edge of the circuit board.

5. The battery pack according to Claim 4, wherein
the inlet opening is in a form of a slit extending along a longitudinal side edge of the circuit board.

6. The battery pack according to Claim 4, wherein
the board holder includes
a pair of opposite peripheral walls extending longitudinally along both sides of the circuit board, and
each of the pair of opposite peripheral walls includes a plurality of protruding peripheral walls each being the protruding peripheral wall.

7. The battery pack according to Claim 4, wherein
the circuit board includes a notch in the outer peripheral edge of the circuit board.

8. The battery pack according to any one of Claims 1 to 7, wherein
the bottom plate includes a plurality of columns of pouring grooves each being the pouring groove.

9. The battery pack according to Claim 1, wherein
the circuit board is a double-sided board on both sides of which components are mounted, and
a back-side component mounted on the back side of the circuit board is
embedded in the ribbed filler made of the potting resin cured in the pouring groove.

10. The battery pack according to Claim 1, wherein
the battery block includes
the battery cells and
a battery holder configured to dispose the battery cells in a fixed position, each of the battery cells is a cylindrical battery,
the battery holder includes a valley groove between the battery cells disposed adjacent to each other,
the pouring groove of the bottom plate is disposed in the valley groove of the battery holder.
